# EUROPÄISCHE PATENTSCHRIFT

(11) **EP 1 753 577 B1**
(45) Veröffentlichungstag und Bekanntmachung des Hinweises auf die Patenterteilung: **14.05.2008**
(21) Anmeldenummer: 05707718.2
(22) Anmeldetag: 05.03.2005
(51) Int. Cl.: B23C 5/24

(54) **FRÄSWERKZEUG**
MILLING CUTTER
OUTIL DE FRAISAGE

(30) Priorität: 27.05.2004 DE 202004008642 U
(43) Veröffentlichungstag der Anmeldung: 21.02.2007
(73) Patentinhaber: KENNAMETAL INC., Latrobe, PA 15650-0231 (US)
(72) Erfinder: SPICHTINGER, Xaver, 92526 Oberviechtach (DE); MANNER, Heinrich, 92543 Guteneck (DE)
(74) Vertreter: Freier, Rüdiger
(86) Internationale Anmeldenummer: PCT/EP2005/002351
(87) Internationale Veröffentlichungsnummer: WO 2005/118193

(56) Entgegenhaltungen:
- EP-A- 1 129 806
- EP-A- 1 213 081
- DE-A1- 10 251 922
- US-A- 1 484 207
- US-A- 3 792 517
- US-A- 6 056 484
- US-A1- 2002 106 251
- PATENT ABSTRACTS OF JAPAN Bd. 2000, Nr. 23, 10. Februar 2001 (2001-02-10) & JP 2001 150218 A (NGK SPARK PLUG CO LTD), 5. Juni 2001 (2001-06-05)

## Beschreibung

Die Erfindung bezieht sich auf ein Fräswerkzeug gemäß dem Oberbegriff des Anspruchs 1, insbesondere Planfräser, zur Bearbeitung von Werkstücken mit mindestens einem in einer Ausnehmung eines Werkzeuggrundkörpers fixierbaren und mittels eines Justierelementes verstellbaren Schneideinsatz. Ein solches Fräswerkzeug ist aus der US 1,484,207 A bekannt.

Ein derartiges Fräswerkzeug ist beispielsweise aus der US 3,339,257 auch bekannt. Dabei sind am Umfang eines im Wesentlichen zylinderförmigen Werkzeuggrundkörpers eine Anzahl von verstellbaren Schneideinsätzen verteilt angeordnet. Die Verstellung oder Justage der Schneideinsätze erfolgt mittels einer zweiteiligen Justiervorrichtung, die aus einem in einer Aufnahmebohrung des Werkzeuggrundkörpers eingesteckten und ein Innengewinde aufweisenden hülsenförmigen Verstellkeil sowie eine mit diesem und mit einem Innengewinde der Aufnahmebohrung verschraubbaren Innenschraube besteht. Mittels der Innenschraube wird der Verstellkeil dieses zweiteiligen Justierelementes entlang einer Seitenfläche einer Schneidplatte oder eines Schneidmessers in Radialrichtung und demzufolge die Schneidplatte in Axialrichtung verschoben. Eine solche zweiteilige Ausführung einer Einstellvorrichtung mit einem wiederum hülsenförmigen Verstellkeil und einer darin geführten Stellschraube ist auch bei dem aus der EP 1 213 081 B1 bekannten Werkzeug zur spanenden Feinbearbeitung von Werkstükken bekannt.

Aus der US 6,155,753 ist eine Verstellvorrichtung für eine Schneidplatte eines Schneidwerkzeugs mit einteiliger Ausführung einer Stellschraube bekannt. Bei dieser bekannten Verstellvorrichtung wird ein zentrischer oder exzentrischer Schraubenkopf der Stellschraube entlang einer konisch verlaufenden Seitenfläche der Schneidplatte in Radialrichtung und demzufolge die Schneidplatte in Axialrichtung verschoben.

Der Erfindung liegt die Aufgabe zugrunde, ein besonders einfach aufgebautes Fräswerkzeug der eingangs genannten Art anzugeben. Dabei soll insbesondere eine zuverlässige Verstellung oder Justage des oder jedes Schneideinsatzes mit möglichst einfachen Mitteln ermöglicht sein.

Diese Aufgabe wird erfindungsgemäß gelöst durch die Merkmale des Anspruchs 1. Dazu ist ein einteiliges Justierelement mit einem kegelförmigen Schraubenkopf- oder Schraubenschaftabschnitt vorgesehen. Vorteilhafte Ausführungen des erfindungsgemäßen Fräswerkzeugs sind in den Unteransprüchen beschrieben. Dieser geht einerseits in einen vorzugsweise zylinderförmigen Schraubenkopf und andererseits in einen Gewindeschaft über, der zweckmäßigerweise ein Feingewinde trägt.

Der zwischen dem Schraubenkopf und dem Gewindekopf verlaufende und sich zum Gewindeschaft hin verjüngende Justierkegel wirkt bei der Feinjustage oder Verstellung des Schneideinsatzes mit einer in dessen dem Justierelement zugewandten Seitenfläche eingebrachten kegelförmigen Ausbringung zusammen. In einer Idealposition besteht dabei zwischen dem Justierkegel des nachfolgend auch als Kegelpassschraube bezeichneten Justierelementes und der kegelförmigen Ausbringung im Schneideinsatz eine Flächenanlage.

Der Schraubenkopf der Kegelpassschraube ist in einem zylindrischen Öffnungs- oder Führungsbereich einer in einem Abstand zum entsprechenden Schneideinsatz in den Werkzeuggrundkörper eingebrachten Justierbohrung geführt und liegt dort zweckmäßigerweise formschlüssig ein. Dabei ist die Bohrungsachse der Justierbohrung gegenüber der Bohrungsachse einer Spannschraubenbohrung für den Schneideinsatz zweckmäßigerweise unter einem Winkel kleiner 40°, beispielsweise 10° bis 30°, vorzugsweise 12°, schräg gestellt. Durch diese schräg verlaufende Bohrungsachse und demzufolge durch die entsprechende Schrägstellung der in der Justierbohrung geführten Kegelpassschraube wird vorteilhafterweise erreicht, dass die an der zylinderförmigen Mantelfläche des Werkzeuggrundkörpers ausmündende Justierbohrung vollumfänglich, d.h. über den gesamten Öffnungsrand der Justierbohrung von Grundkörpermaterial gebildet bzw. umgeben ist. Dadurch verbleibt im Bereich zwischen der den Schneideinsatz aufnehmenden Aufnehmung und der Justierbohrung im Werkzeuggrundkörper zumindest im Bereich des Schraubenkopfes der Kegelpassschraube ein Materialsteg. Die Breite oder Dicke dieses Materialsteges hängt dabei einerseits von der Größe des Winkels der Schrägstellung der Justierbohrung gegenüber der Spannschraubenbohrung für den Schneideinsatz und andererseits von dem Kegelwinkel des Justierkegels der Kegelpassschraube ab.

Der Schneideinsatz weist vorzugsweise im Bereich einer Durchgangsöffnung für die den Schneideinsatz in der Ausnehmung im Werkzeuggrundkörper fixierenden Spannschraube einen Längsschlitz auf. Der Längsschlitz kann geradlinig oder auch bogen- oder linsenförmig ausgeführt sein. Dieser Schlitz erstreckt sich dabei beidseitig der Durchgangsöffnung in Längsrichtung des Schneideinsatzes. Insbesondere in Verbindung mit einer kegelförmigen Spannschraube wird somit bei der Fixierung des Schneideinsatzes über den kegelförmigen Schraubenkopf der Spannschraube der längsgeschlitzte Schneideinsatz aufgeweitet, so dass dieser in der Ausnehmung form- und kraftschlüssig sowie insbesondere spielfrei einliegt. Dadurch ist gewährleistet, dass die infolge einer Rotation des Fräswerkzeugs erzeugten Fliehkräfte nicht von der Spannschraube, sondern vielmehr von dem Werkzeuggrundkörper aufgenommen werden. Dabei sorgt eine symmetrisch oder unsymmetrisch schwalbenschwanzförmig ausgebildete Ausnehmung im Werkzeuggrundkörper für einen sicheren Halt des Schneideinsatzes. Die an die schwalbenschwanzförmige Ausnehmung angepasste und somit ebenfalls schwalbenschanzartige Außenkontur des Schneideinsatzes ist mit abgerundeten Einliegekanten ausgeführt.

In vorteilhafter Ausgestaltung ist einer der am Umfang des Werkzeuggrundkörpers verteilt angeordneten Schneideinsätze im Einbauzustand gegenüber den anderen Schneideinsätzen erhöht und steht dabei aus der Arbeitsoberfläche des Werkzeuggrundkörpers um beispielsweise 0,05 mm gegenüber den anderen Schneideinsätzen hervor. Der erhöhte Schneideinsatz dient in besonders einfacher sowie zuverlässiger Art und Weise als Markierung für eine Ersteinstellung, indem der erhöhte Schneideinsatz die erste Einstellschneide bildet.

Weitere vorteilhafte Ausgestaltungen und Weiterbildungen des erfindungsgemäßen Fräswerkzeugs sind in den Unteransprüchen angegeben. So ist vorzugsweise der Schneideinsatz im Bereich einer von diesem lösbar oder unlösbar gehaltenen Schneide mit einer Span- oder Spanablaufnut versehen.

Die mit der Erfindung erzielten Vorteile bestehen insbesondere darin, dass durch die einteilige Ausführung des Justierelementes zur Verstellung des jeweiligen Schneideinsatzes am Werkzeuggrundkörper eines Fräswerkzeugs eine besonders einfach ausgeführte und gleichzeitig besonders feine oder feinfühlige Justierung der jeweiligen Schneide bzw. des diese tragenden Schneideinsatzes ermöglicht ist.

Durch die Schwalbenschwanzführung des entsprechend konisch ausgebildeten Schneideinsatzes in einer schwalbenschwanzförmigen Ausnehmung im Werkzeuggrundkörper ist eine besonders exakte Positionierung der Schneideinsätze und damit der Schneiden erreicht. Diese Schwalbenschwanzführung dient zusätzlich zur Positionierung auch als besonders effektive Fliehkraftsicherung bei hohen Drehzahlen des Fräswerkzeugs, die dadurch um ca. 20% erhöht werden können. Durch die Schwalbenschwanzführung wird zudem eine besonders einfache Handhabung bei der Erstbestückung oder auch beim Auswechseln der Schneideinsätze erreicht.

Durch die in die Schneideinsätze integrierten Spannuten kann auf als separate Bauteile ausgeführte Spanabweiser verzichtet werden, so dass zusätzlich zur einteiligen Ausführung der Justier- oder Verstellvorrichtung für den jeweiligen Schneideinsatz eine weitere Bauteilreduzierung erreicht ist. Durch die einteilige Ausführung des Justierelements in Form der Kegelpassschraube kann durch einfaches Verdrehen der im und entgegen dem Uhrzeigersinn verdrehbaren Kegelpassschraube der Schneideinsatz und damit die Schneide im Mikrometerbereich exakt eingestellt werden.

Zudem kann bei dem erfindungsgemäßen Fräswerkzeug aufgrund der Bauteilreduzierung die Anzahl der Schneideinsätze und damit die Anzahl der Schneiden erheblich erhöht werden, wodurch auch eine Erhöhung der Vorschub- und/oder Schnittgeschwindigkeit erreicht wird.

In vorteilhafter Ausgestaltung umfasst der Werkzeuggrundkörper einen Grundkörperträger und einen hierauf aufgesetzten Tragring. Dieser ist auf den Grundkörperträger vorzugsweise aufgeschrumpft. Der Tragring kann alternativ oder zusätzlich mit dem Grundkörperträger verschraubt sein. Der Tragring ist zweckmäßigerweise als Stahlring ausgeführt, während der Grundkörperträger bevorzugt aus Aluminium besteht. An dem Tragring umfangsseitig vorzugsweise gleichmäßig angeordnete Schneideinsätze sind zweckmäßigerweise ebenfalls lösbar am Tragring, d. h. in dort wiederum vorgesehenen Ausnehmungen fixiert.

Die Ausgestaltung des Werkzeuggrundkörpers mit einem solchen Grundkörperträger und mit einem solchen Tragring, der auf den Grundkörperträger aufgesetzt oder aufgeschrumpft und ggf. zusätzlich mit diesem verschraubt sein kann, ist praktisch für die Aufnahme beliebiger Schneideinsätze geeignet, unabhängig von der Art und Weise der Fixierung sowie unabhängig von der Art und Weise der Justierung oder Justierbarkeit der Schneideinsätze und daher für sich erfinderisch.

Nachfolgend wird ein Ausführungsbeispiel der Erfindung anhand einer Zeichnung näher erläutert. Darin zeigen die
- Fig. 1 bis 3: ein erfindungsgemäßes Fräswerkzeug mit einer Anzahl von verstellbaren Schneideinsätzen in einer Draufsicht, in einer Seitenansicht bzw. in perspektivischer Darstellung,
- Fig. 4: das Fräswerkzeug in einer Schnittdarstellung entlang der Linie IV-IV in Fig. 1,
- Fig. 5: in einer Schnittdarstellung entlang der Linie V-V in Fig. 1 den mittels einer einteiligen Kegelpassschraube verstellbaren Schneideinsatz,
- Fig. 6 und 7: in perspektivischer Darstellung den verstellbaren Schneideinsatz mit Kegelpassschraube in einer Explosionsdarstellung bzw. in Einbausituation, sowie
- Fig. 8 und 9: in perspektivischer und teilweise geschnittener Darstellung bzw. in einer Schnittdarstellung einen zweiteiligen Werkzeuggrundkörper mit einem Grundkörperträger und mit einem hierauf aufgesetzten Tragring zur Aufnahme einer Anzahl von Schneideinsätzen.

Einander entsprechende Teile sind in allen Figuren mit den gleichen Bezugszeichen versehen.

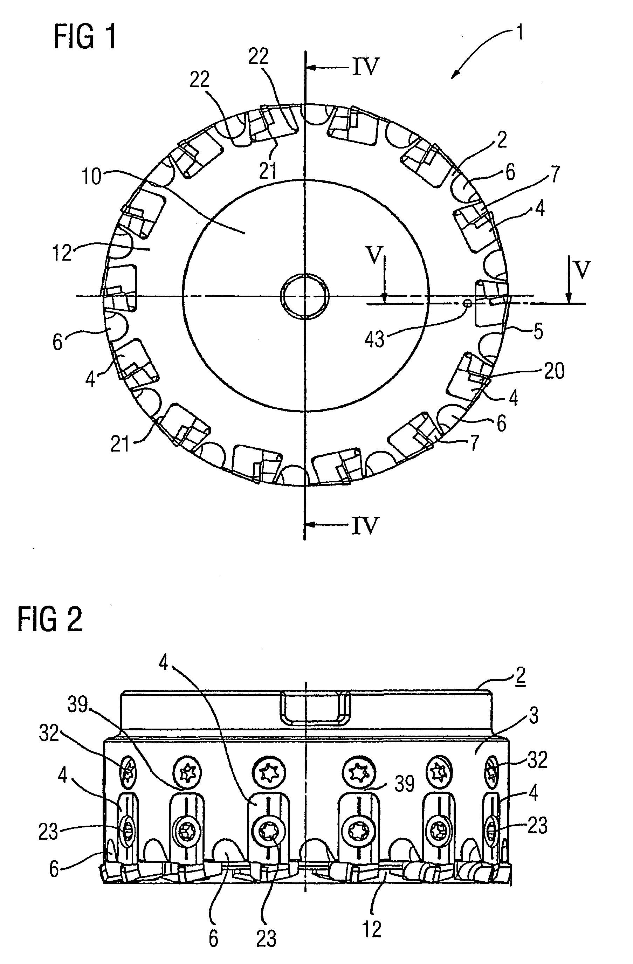

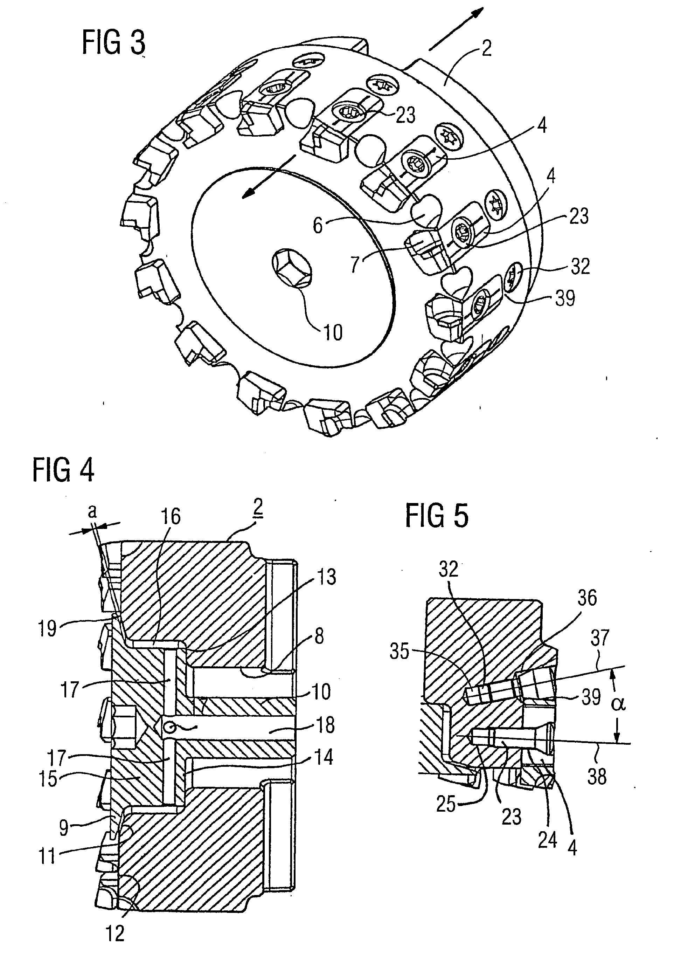

Das in den Figuren 1 bis 3 in unterschiedlichen Ansichten dargestellte Fräswerkzeug 1 umfasst einen Werkzeuggrundkörper 2, der gemäß Fig. 4 hohlzylinderförmig ausgebildet ist. Das Grundkörpermaterial des Werkzeuggrundkörpers 2 kann Aluminium, Titan oder Stahl sein.

Der Werkzeuggrundkörper 2 trägt an seiner seitlichen Grundkörpermantelfläche 3 eine Vielzahl von Schneideinsätzen 4, die am Außenumfang 5 des Werkzeuggrundkörpers 2 gleichmäßig verteilt angeordnet sind. Auch können die Schneideinsätze 4 ungleichmäßig am Außenumfang 5 des Werkzeuggrundkörpers 2 angeordnet sein. Zwischen den Schneideinsätzen4 sind Spanleitnuten 6 in den Werkzeuggrundkörper 2 im Bereich dessen Grundkörpermantelfläche 3 eingebracht. Wie aus Fig. 3 vergleichsweise deutlich ersichtlich ist, münden in diese Spanleitnuten 6 korrespondierende Spannuten 7 ein, die in den jeweiligen Schneideinsatz 4 integriert sind.

Wie aus Fig. 4 ersichtlich ist, ist eine zentrale Durchgangsöffnung 8 des Werkzeuggrundkörpers 2 von einem Schraubenkragen 9 einer die Durchgangsöffnung 8 durchsetzenden tellerförmigen Befestigungsschraube 10 am Öffnungsrand 11 der Durchgangsöffnung 8 überlappt. Die Durchgangsöffnung 8 mündet über den Öffnungsrand 11 in die Deck- oder Arbeitsoberfläche 12 des Werkzeuggrundkörpers 2 ein. Die Durchgangsöffnung 8 ist als Stufenbohrung unter Bildung einer Spannfläche 13 ausgeführt, an der eine entsprechende Kragenkontur 14 eines Schraubenhalses 15 unter Bildung eines ringförmigen Kühlmittelkanals 16 anliegt. In diesen Kühlmittelkanal 16 münden Kühlmittelbohrungen 17 ein, die wiederum in einer zentralen Kühlmittelbohrung 18 zusammengeführt sind.

Über diese Kühlmittelbohrungen 17,18 sowie über den ringförmigen Kühlmittelkanal 16 wird im Betrieb des Fräswerkzeugs 1 an die Werkzeug- oder Arbeitsoberfläche 12 ein Kühlmittel geführt. Dazu tritt das Kühlmittel über einen zwischen dem Öffnungsrand 11 der Durchgangsöffnung 8 und dem diese überlappenden Schraubenkragen 9 gebildeten Kühlspalt 19, in den der Kühlkanal 16 ausmündet, an die Arbeitsoberfläche 12 aus und gelangt über diese an den Arbeitsbereich zwischen von den Schneideinsätzen 4 getragenen Schneiden oder Schneidplatten 20 und das zu bearbeitende (nicht dargestellte) Werkstück. Die Breite a des Kühlspaltes 19 beträgt zweckmäßigerweise ca. 0,8mm.

Anstelle der zentralen Durchgangsöffnung 8 mit separater Befestigungsschraube 10 kann der Werkzeuggrundkörper 2 auch mit einem einstückigen Aufnahmeschaft oder mit einer Kupplung ausgeführt sein.

Wie aus Fig. 1 vergleichsweise deutlich ersichtlich ist, sind die Schneideinsätze 4 in schwalbenschwanzförmigen Ausnehmungen 21 im Werkzeuggrundkörper 2 geführt. Der jeweilige Schneideinsatz 4 weist dabei eine der schwalbenschwanzförmigen Ausnehmung 21 angepasste Außenkontur mit abgerundeten Einliegekanten 22 auf.

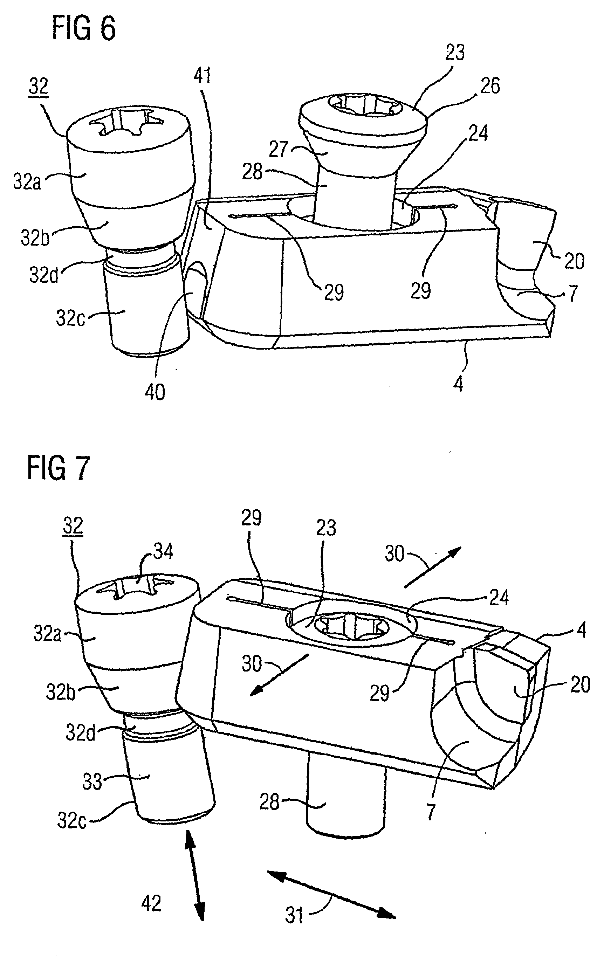

Der jeweilige Schneideinsatz 4 ist am Werkzeuggrundkörper 2 mittels einer Spannschraube 23 fixiert. Wie aus Fig. 6 vergleichsweise deutlich ersichtlich ist, durchsetzt dazu die Spannschraube 23 eine entsprechende Spannschraubenöffnung 24 im Schneideinsatz 4. Die Spannschraube 23 ist in eine mit einem Innengewinde versehende Spannschraubenbohrung 25 im Werkzeuggrundkörper 2 eingeschraubt.

Wie aus den Fig. 6 und 7 vergleichsweise deutlich ersichtlich ist, weist die jeweilige Spannschraube 23 einen kegelförmigen Schraubenkopf 26 auf, dessen Kegel 27 sich zum Gewindeschaft 28 der Spannschraube 23 hin verjüngt. Gemäß Fig. 7 ist die Spannschraube 23 im Montageendzustand des Schneideinsatzes 4 vollständig in der Durchgangsöffnung 24 des Schneideinsatzes 4 eingelegt. Für eine besonders zuverlässige Fixierung des Schneideinsatzes 4 in der entsprechenden schwalbenschwanzförmigen Ausnehmung 21 im Werkzeuggrundkörper 2 ist der Schneideinsatz 4 mit einem Längsschlitz 29 versehen, der sich beidseitig der Durchgangsöffnung 24 des Schneideinsatzes 4 erstreckt. Der Längsschlitz 29 ermöglicht ein Aufweiten des Schneideinsatzes 4 in Spreizrichtung 30.

Bei der Montage des Schneideinsatzes 4 in die jeweilige Ausnehmung 21 des Werkzeuggrundkörpers 2 mittels der Spannschraube 23 wird über den Schraubenkegel 27 der Spannschraube 23 der mit dem Längsschlitz 29 versehene Schneideinsatz 4 aufgeweitet oder aufgespreizt mit der Folge, dass dieser Schneideinsatz 4 spielfrei in der jeweiligen Ausnehmung 21, insbesondere durch Klemmung, fixiert ist. Dadurch ist sichergestellt, dass infolge einer Rotationsbewegung des Fräswerkzeugs 1 betriebsbedingt auftretende Fliehkräfte nicht von der Spannschraube 23, sondern von dem Werkzeuggrundkörper 2 aufgenommen werden.

Der oder jeder Schneideinsatz 4 ist in der zugehörigen Ausnehmung 21 des Werkzeuggrundkörpers 2 in Axialrichtung 31 verschiebbar und damit in die gewünschte Position justierbar. Infolge einer entsprechenden Verstellung des Schneideinsatzes 4 wird die an diesem lösbar oder unlösbar gehaltene Schneide 20 in die gewünschte Anlageposition am zu bearbeitenden Werkstück geführt. Die Verstellung oder Justage des Schneideinsatzes 4 erfolgt dabei mittels eines nachfolgend als Kegelpassschraube 32 bezeichneten einteiligen Justierelementes.

Die Kegelpassschraube 32 weist dabei einen zylinderförmigen Schraubenkopf oder Schraubenkopfabschnitt 32a und einen sich daran anschließenden Justierkegel oder Justierkegelabschnitt 32b sowie einen sich daran anschließenden, nachfolgend als Gewindeschaft bezeichneten Schraubenschaftabschnitt 32c mit einem Außengewinde 33 auf. Zwischen dem sich zum Gewindeschaft 32c hin verjüngenden Justierkegel 32b und dem Gewindeschaft 32c ist ein taillierter Schaftabschnitt 32d an der Kegelpassschraube 32 vorgesehen. Kopfseitig ist die Kegelpassschraube 32 mit einer Kreuz- oder Vielschlitzausnehmung 34 zur Aufnahme eines Handhabungswerkzeugs versehen.

Wie aus Fig. 5 vergleichsweise deutlich ersichtlich ist, liegt die in einer zur Ausnehmung 21 für den Schneideinsatz 4 beabstandete Justierbohrung 35 und im Montagezustand eingedrehte Kegelpassschraube 32 mit deren zylinderförmigen Schraubenkopfabschnitt 32a in einem entsprechenden Führungsbereich 36 im Werkzeuggrundkörper 2 formschlüssig und damit passgenau ein. Dabei ist die Bohrungsachse 37 der Justierbohrung 35 schräg gestellt. Der Führungsbereich 36 im Werkzeuggrundkörper 3, in dem die Kegelpassschraube 32 mit deren zylinderförmigen Schraubenkopf 32 einliegt, ist als zylinderförmiger oder zylindrischer Öffnungsbereich ausgebildet. Die Bohrungsachse 37 und damit die Justierbohrung 35 ist gegenüber der Bohrungsachse 38 der Spannschraubenbohrung 25 um einen Winkel α kleiner 40° schräg gestellt. Der Schrägstellwinkel α liegt beispielsweise zwischen α = 10° und α =30° und beträgt vorzugsweise α =12°.

Durch diese Schrägstellung der Kegelpassschraube 32 wird insbesondere erreicht, dass im Bereich zwischen der Ausnehmung 21 für den jeweiligen Schneideinsatz 4 und der Justierbohrung 35 in der Grundkörpermantelfläche 3 des Werkzeuggrundkörpers 2 ein Materialsteg 39 vorhanden ist, was insbesondere aus Fig. 2 vergleichsweise deutlich ersichtlich ist. Die Kegelpassschraube 32 liegt somit zur Kassettenausnehmung 21 beabstandet im Werkzeuggrundkörpers 2 formschlüssig und damit passgenau ein.

In der in Fig. 7 dargestellten Justierposition der Kegelpassschraube 32 liegt der Justierkegel 32b der Kegelpassschraube 32 in einer kegelförmigen Ausnehmung oder Ausbringung 40 in der der Kegelpassschraube 32 zugewandten Seitenfläche 41 des Schneideinsatzes 4 ein. In dieser Justier- oder Idealposition ist eine vollflächige Anlage oder Flächenanlage des Justierkegels 32b in der kegelförmigen Ausbringung 40 hergestellt. Die kegelförmige Ausnehmung 40 am Schneideinsatz bzw. an der Schneideinsatzkassette 4 ergibt mit der Kegelfläche bzw. dem Justierkegel 32b der Kegelpassschraube 32 eine vollflächige Anlage oder Flächenanlage. Infolge einer Rechts-LinksDrehung oder Feinjustierung der Kegelpassschraube 32 bewegt sich diese innerhalb der Justierbohrung 30 in Radialrichtung 42 mit der Folge, dass der Schneideinsatz 4 und damit die von diesem getragene Schneide 20 in Axialrichtung 31 bewegt oder verstellt wird.

Aufgrund der einteiligen Ausführung des Justierelementes in Form der Kegelpassschraube 32 ist eine besonders feine und im µm-Bereich genaue Einstellung des Schneideinsatzes 4 und der von diesem getragenen Schneide 20 erreichbar. Dabei werden für diese besonders exakte Verstellbarkeit des Schneideinsatzes 4 besonders wenig Bauteile benötigt. Da zudem der Schneideinsatz 4 selbst bereits im Bereich der jeweiligen Schneide 20 mit einer Spannut 7 versehen ist, wird eine weitere Bauteilreduzierung erreicht. Insgesamt hat dies zur Folge, dass das vorzugsweise als Planfräser eingesetzte Fräswerkzeug 1 mit einer besonders großen Anzahl von Schneideinsätzen 4 versehen werden kann.

In vorteilhafter Ausgestaltung ist einer der am Umfang 5 des Werkzeuggrundkörpers 2 verteilt angeordneten Schneideinsätze 4 im Einbauzustand gegenüber den anderen Schneideinsätzen 4 erhöht und steht dabei aus der Arbeitsoberfläche 12 des Werkzeuggrundkörpers 2 um zweckmäßigerweise 0,05 mm gegenüber den anderen Schneideinsätzen 4 hervor. Der mittels einer Markierung 43 an der Arbeitsoberfläche 12 kenntlich gemachte erhöhte Schneideinsatz 4 dient in besonders einfacher Art und Weise als Markierung für eine Ersteinstellung, indem der erhöhte Schneideinsatz 4 die erste Einstellschneide bildet.

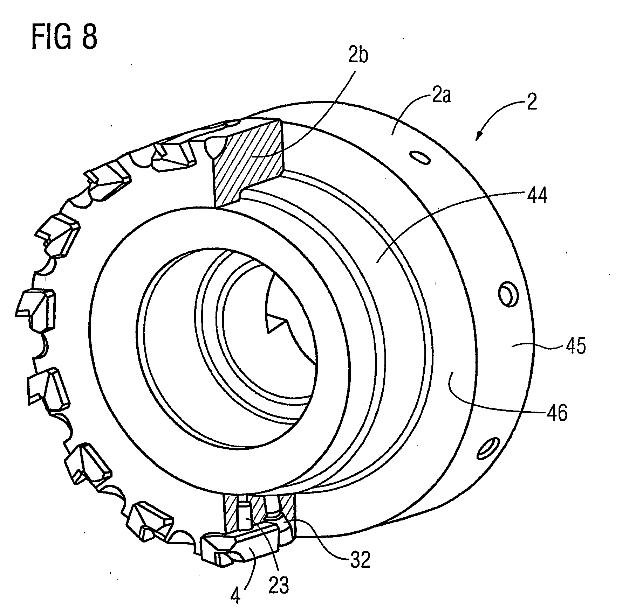

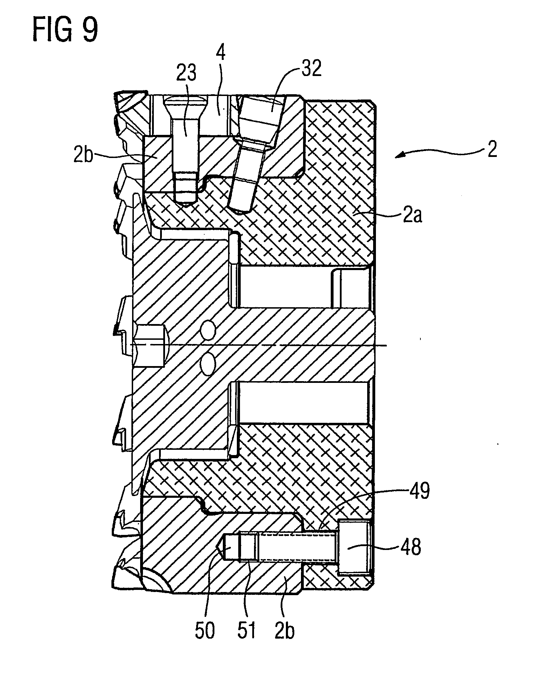

Die Fig. 8 und 9 zeigen einen zweiteiligen Werkzeuggrundkörper 2 mit einem Grundkörperträger 2a und mit einem Tragring 2b. Der Grundkörperträger 2a ist im Querschnitt etwa T-förmig unter Bildung eines zylindrischen Tragschaftes 44 und eines einstückig mit diesem verbundenen kragenartigen Anlage- oder Stützring 45. Der Tragring 2b ist im Querschnitt etwa L-förmig. Der Grundkörperträger 2b besteht vorzugsweise aus Aluminium. Der Tragring 2b ist zweckmäßigerweise ein Stahlring.

Der Tragring 2b ist auf den Schaft 44 des Grundkörperträgers 2a aufgesetzt. In der dargestellten Montageposition liegt der Tragring 2b an der Stirnseite 46 des Anlage- oder Stützrings 45 des Grundkörperträgers 2a flächig an. Der Schaft 44 des Grundkörperträgers 2b ist unter Ausbildung einer stufigen Anlage- oder Kragenkontur 47 an die L-förmige Kontur des Tragrings 2b angepasst.

Der Tragring 2b trägt umfangseitig die Schneideinsätze 4, die dabei am Umfang des Tragrings 2b zweckmäßigerweise gleichmäßig verteilt angeordnet sind. Die die Schneideinsätze 4 am Werkzeuggrundkörper 2 haltenden Spannschrauben 23 erstrecken sich vorzugsweise lediglich in den Tragring 2b hinein, so dass die Schneideinsätze 4 lediglich am Tragring 2b gehalten sind. Jedoch können diese Spannschrauben 23 den Tragring 2b auch durchdringen und sich bis in der Grundkörperträger 2a hinein erstrecken. Analog sind die Justielemente oder Kegelpassschrauben 32 lediglich in den Tragring 2b eingeschraubt. Jedoch können auch diese sich bis in den Grundkörperträger 2a hineinerstrecken.

Der Trag- oder Stahlring 2b ist auf den Grundkörperträger 2a und dort auf dessen Schaft 44 bevorzugt aufgeschrumpft. Zusätzlich oder alternativ kann der Tragring 2b mit dem Grundkörperträger 2a auch verschraubt sein. Hierzu zeigt Fig. 9 eine sich axial erstreckende Fixierschraube 48, die eine Durchgangsöffnung 49 im Grundkörperträger 2a durchdringt, und die mittels deren Gewindeschaft 50 mit einer ein Innengewinde aufweisenden Innenbohrung 51 im Tragring 2b verschraubt ist. Anstelle einer einzelnen Fixierschraube 48 können auch mehrere derartige Fixierschrauben 48 zur zusätzlichen oder alternativen Befestigung des Tragrings 2b auf oder an dem Grundkörperträger 2a vorgesehen sein.

## Patentansprüche

1. Fräswerkzeug (1) zur Bearbeitung von Werkstücken, mit mindestens einem in einer Ausnehmung (21) eines Werkzeuggrundkörpers (2) fixierbaren und mittels eines Justierelementes (32) verstellbaren Schneideinsatz (4), wobei das Justierelement (32) einteilig ausgebildet ist und mit einem zwischen einem Schraubenkopf (32a) und einem Gewindeschaft (32c) verlaufenden Justierkegel (32b) versehen ist, **gekennzeichnet durch** eine in eine Seitenfläche (41) des Schneideinsatzes (4) eingebrachte kegelförmige Ausbringung (40), die mit dem Justierbegel zusammenwirkt.

2. Fräswerkzeug nach Anspruch 1,
**gekennzeichnet durch**
eine zur Ausnehmung (21) für den Schneideinsatz (4) beabstandete Justierbohrung (35) mit einem mit dem Gewindeschaft (32c) des Justierelementes (32) korrespondierenden Innengewinde und mit einem zylindrischen Öffnungsbereich (36), in dem der Schraubenkopf (32a) des Justierelementes (32) geführt ist.

3. Fräswerkzeug nach Anspruch 2,
**dadurch gekennzeichnet,**
**dass** die Bohrungsachse (37) der Justierbohrung (35) gegenüber der Bohrungsachse (38) einer Spannschraubenbohrung (25) für den Schneideinsatz (4) schräg gestellt ist.

4. Fräswerkzeug nach Anspruch 3,
**dadurch gekennzeichnet,**
**dass** die Schrägstellung (α) der Bohrungsachse (37) der Justierbohrung (35) zwischen α > 0° und α < 40°, zweckmäßigerweise α = (20 ± 10)°, vorzugsweise α = 12°, beträgt.

5. Fräswerkzeug nach einem der Ansprüche 1 bis 4,
**dadurch gekennzeichnet,**
**dass** das Justierelement (32) zwischen dem Justierkegel (32b) und dem Gewindeschaft (32c) eine taillierten Schaftabschnitt (32d) aufweist.

6. Fräswerkzeug nach einem der Ansprüche 1 bis 5,
**dadurch gekennzeichnet,**
**dass** der Schneideinsatz (4) im Bereich einer Durchgangsöffnung (24) für eine Spannschraube (23) einen Längsschlitz (29) aufweist.

7. Fräswerkzeug nach einem der Ansprüche 1 bis 6,
**gekennzeichnet durch**
eine kegelförmige Spannschraube (23) zur Fixierung des Schneideinsatzes (4) in der Ausnehmung (21) des Werkzeuggrundkörpers (2).

8. Fräswerkzeug nach einem der Ansprüche 1 bis 7,
**dadurch gekennzeichnet,**
**dass** in den Schneideinsatz (4) im Bereich einer von diesem gehaltenen Schneide (20) eine Spannut (7) integriert ist.

9. Fräswerkzeug nach einem der Ansprüche 1 bis 8,
**gekennzeichnet durch**
eine schwalbenschwanzförmige Ausnehmung (21) im Werkzeuggrundkörper (2) zur Aufnahme des Schneideinsatzes (4).

10. Fräswerkzeug nach Anspruch 9,
**dadurch gekennzeichnet,**
**dass** der Schneideinsatz (4) eine an die schwalbenschwanzförmige Ausnehmung (21) angepasste Außenkontur mit abgerundeten Einliegekanten (22) aufweist.

11. Fräswerkzeug nach einem der Ansprüche 1 bis 9,
**gekennzeichnet durch**
einen im Einbauzustand bezüglich der Arbeitsoberfläche (12) des Werkzeuggrundträgers (2) gegenüber jedem anderen Schneideinsatz (4) erhöhten Schneideinsatz (4).

12. Fräswerkzeug nach einem der Ansprüche 1 bis 11,
**dadurch gekennzeichnet,**
**dass** der Werkzeuggrundkörper (2) eine zentrale Durchgangsöffnung (8) mit einer Spannfläche (13) aufweist, an der eine tellerförmige Befestigungsschraube (10) mit einer entsprechenden Kragenkontur (14) eines Schraubenhalses (15) unter Bildung eines ringförmigen Kühlmittelkanals (16) anliegt, der in einen zwischen dem Öffnungsrand (11) der Durchgangsöffnung (10) und einem diese überlappenden Schraubenkragen (9) gebildeten Kühlspalt (19) ausmündet.

13. Fräswerkzeug nach einem der Ansprüche 1 bis 12,
**dadurch gekennzeichnet,**
**dass** der Werkzeuggrundkörper (2) einen Grundkörperträger (2a) und einen hierauf aufgesetzten Tragring (2b) umfasst, an dem der Schneideinsatzes (4) fixierbar ist.

14. Fräswerkzeug nach Anspruch 13,
**dadurch gekennzeichnet,**
**dass** der Tragring (2b) auf den Grundkörperträger (2a) aufgeschrumpft ist.

15. Fräswerkzeug nach Anspruch 13 oder 14,
**dadurch gekennzeichnet,**
**dass** der Tragring (2b) mit dem Grundkörperträger (2a) verschraubt ist.

16. Fräswerkzeug nach einem der Ansprüche 13 bis 15,
**dadurch gekennzeichnet,**
**dass** der Grundkörperträger (2a) aus Aluminium besteht.

17. Fräswerkzeug nach einem der Ansprüche 13 bis 16,
**dadurch gekennzeichnet,**
**dass** der Tragring (2b) ein Stahlring ist.

## Claims

1. Milling cutter (1) for machining workpieces, comprising at least one cutting insert (4) which can be fixed in a recess (21) of a tool parent body (2) and can be adjusted by means of an adjusting element (32), the adjusting element (32) being designed in one piece and being provided with an adjusting cone (32b) running between a screw head (32a) and a threaded shank (32c), **characterized by** a conical relieved portion (40) which is incorporated in a side surface (41) of the cutting insert (4) and interacts with the adjusting cone (32b).

2. Milling cutter according to Claim 1, **characterized by** an adjusting hole (35) which is at a distance from the recess (21) for the cutting insert (4) and has an internal thread corresponding with the threaded shank (32c) of the adjusting element (32) and a cylindrical opening region (36) in which the screw head (32a) of the adjusting element (32) is guided.

3. Milling cutter according to Claim 2, **characterized in that** the hole axis (37) of the adjusting hole (35) is inclined relative to the hole axis (38) of a clamping screw hole (25) for the cutting insert (4).

4. Milling cutter according to Claim 3, **characterized in that** the inclination (α) of the hole axis (37) of the adjusting hole (35) is between α > 0° and α < 40°, expediently α = (20 ± 10)°, preferably α = 12°.

5. Milling cutter according to one of Claims 1 to 4, **characterized in that** the adjusting element (32) has a reduced shank section (32d) between the adjusting cone (32b) and the threaded shank (32c).

6. Milling cutter according to one of Claims 1 to 5, **characterized in that** the cutting insert (4) has a longitudinal slot (29) in the region of a through-opening (24) for a clamping screw (23).

7. Milling cutter according to one of Claims 1 to 6, **characterized by** a conical clamping screw (23) for fixing the cutting insert (4) in the recess (21) of the tool parent body (2).

8. Milling cutter according to one of Claims 1 to 7, **characterized in that** a chip groove (7) is integrated in the cutting insert (4) in the region of a bit (20) held by the latter.

9. Milling cutter according to one of Claims 1 to 8, **characterized by** a dovetailed recess (21) in the tool parent body (2) for accommodating the cutting insert (4).

10. Milling cutter according to Claim 9, **characterized in that** the cutting insert (4) has an outer contour adapted to the dovetailed recess (21) and having rounded-off inset edges (22).

11. Milling cutter according to one of Claims 1 to 9, **characterized by** a cutting insert (4) raised relative to every other cutting insert (4) in the fitted state with respect to the working surface (12) of the tool parent body (2).

12. Milling cutter according to one of Claims 1 to 11, **characterized in that** the tool parent body (2) has a central through-opening (8) having a clamping surface (13), against which a plate-shaped fastening screw (10) having a corresponding collar contour (14) of a screw neck (15) bears while forming an annular coolant passage (16), which opens out into a cooling gap (19) formed between the opening margin (11) of the through-opening (10) and a screw collar (9) overlapping the latter.

13. Milling cutter according to one of Claims 1 to 12, **characterized in that** the tool parent body (2) comprises a parent body support (2a) and a supporting ring (2b) which is put onto said parent body support (2a) and to which the cutting insert (4) can be fixed.

14. Milling cutter according to Claim 13, **characterized in that** the supporting ring (2b) is shrunk onto the parent body support (2a).

15. Milling cutter according to Claim 13 or 14, **characterized in that** the supporting ring (2b) is screwed to the parent body support (2a).

16. Milling cutter according to one of Claims 13 to 15, **characterized in that** the parent body support (2a) is made of aluminium.

17. Milling cutter according to one of Claims 13 to 16, **characterized in that** the supporting ring (2b) is a steel ring.

## Revendications

1. Outil de fraisage (1) pour l'usinage de pièces d'oeuvre, comprenant au moins un insert de coupe (4) qui peut être fixé dans un logement en creux (21) d'un corps de base d'outil (2) et être réglé au moyen d'un élément d'ajustage (32), l'élément d'ajustage (32) étant réalisé d'un seul tenant et pourvu d'un cône d'ajustage (32b) qui s'étend entre une tête de vis (32a) et un corps fileté (32c),
**caractérisé par** un évidement (40) de forme conique, qui est réalisé dans une surface latérale (41) de l'insert de coupe (4), et coopère avec le cône d'ajustage.

2. Outil de fraisage selon la revendication 1,
**caractérisé par** un perçage d'ajustage (35) espacé du logement en creux (21) pour l'insert de coupe (4), et comprenant un filetage intérieur correspondant au corps fileté (32c) de l'élément d'ajustage (32), ainsi qu'une zone d'ouverture cylindrique (36) dans laquelle est guidée la tête de vis (32a) de l'élément d'ajustage (32).

3. Outil de fraisage selon la revendication 2,
**caractérisé en ce que** l'axe de perçage (37) du perçage d'ajustage (35) est dans une position inclinée par rapport à l'axe de perçage (38) d'un perçage de vis de serrage (25) pour l'insert de coupe (4).

4. Outil de fraisage selon la revendication 3,
**caractérisé en ce que** la position inclinée (α) de l'axe de perçage (37) du perçage d'ajustage (35) présente une valeur entre α>0° et α<40°, utilement de α = (20 ± 10)°, de préférence de α = 12°.

5. Outil de fraisage selon l'une des revendications 1 à 4, **caractérisé en ce que** l'élément d'ajustage (32) présente entre le cône d'ajustage (32b) et le corps fileté (32c), un tronçon de corps rétréci (32d).

6. Outil de fraisage selon l'une des revendications 1 à 5, **caractérisé en ce que** l'insert de coupe (4) présente une fente longitudinale (29) dans la zone d'une ouverture de passage (24) pour une vis de serrage (23).

7. Outil de fraisage selon l'une des revendications 1 à 6, **caractérisé par** une vis de serrage (23) de forme conique pour la fixation de l'insert de coupe (4) dans le logement en creux (21) du corps de base d'outil (2).

8. Outil de fraisage selon l'une des revendications 1 à 7, **caractérisé en ce que** dans l'insert de coupe (4), dans la zone d'une plaquette de coupe (20) qu'il supporte, est intégrée une rainure à copeaux (7).

9. Outil de fraisage selon l'une des revendications 1 à 8, **caractérisé par** un logement en creux (21) en forme de queue d'aronde dans le corps de base d'outil (2), destiné à recevoir l'insert de coupe (4).

10. Outil de fraisage selon la revendication 9, **caractérisé en ce que** l'insert de coupe (4) présente un contour extérieur adapté au logement en creux (21) en forme de queue d'aronde, et comportant des arêtes de bordure d'insertion (22) arrondies.

11. Outil de fraisage selon l'une des revendications 1 à 9, **caractérisé par** un insert de coupe (4) qui, dans l'état implanté, est, relativement à la surface de travail (12) du corps ou support de base d'outil (2), surélevé par rapport à chaque autre insert de coupe (4).

12. Outil de fraisage selon l'une des revendications 1 à 11, **caractérisé en ce que** le corps de base d'outil (2) présente une ouverture de passage centrale (8) comprenant une surface de serrage (13) sur laquelle s'appuie une vis de fixation (10) en forme d'assiette, avec un contour de collerette (14) correspondant d'un collet de vis (15), en formant un canal de fluide de refroidissement (16) de forme annulaire, qui débouche dans un interstice de refroidissement (19) formé entre le bord d'ouverture (11) de l'ouverture de passage (10) et une collerette de vis (9) qui surmonte ce dernier.

13. Outil de fraisage selon l'une des revendications 1 à 12, **caractérisé en ce que** le corps de base d'outil (2) comprend un support de corps de base (2a) et un anneau de support (2b) qui y est rapporté et sur lequel peut être fixé l'insert de coupe (4).

14. Outil de fraisage selon la revendication 13, **caractérisé en ce que** l'anneau de support (2b) est fretté sur le support de corps de base (2a).

15. Outil de fraisage selon la revendication 13 ou 14, **caractérisé en ce que** l'anneau de support (2b) est vissé au support de corps de base (2a).

16. Outil de fraisage selon l'une des revendications 13 à 15, **caractérisé en ce que** le support de corps de base (2a) est réalisé en aluminium.

17. Outil de fraisage selon l'une des revendications 13 à 16, **caractérisé en ce que** l'anneau de support (2b) est un anneau en acier.
